Europäisches Patentamt

(19) European Patent Office

Office européen des brevets

(11) **EP 0 957 068 A1**

(12) **EUROPEAN PATENT APPLICATION**
published in accordance with Art. 158(3) EPC

(43) Date of publication:
17.11.1999 Bulletin 1999/46

(51) Int. Cl.$^6$: **C03B 37/02**

(21) Application number: 97913571.2

(86) International application number:
PCT/RU97/00355

(22) Date of filing: 18.11.1997

(87) International publication number:
WO 98/22401 (28.05.1998 Gazette 1998/21)

(84) Designated Contracting States:
BE DE FR GR IT NL

(30) Priority: 19.11.1996 RU 96122192

(71) Applicants:
• Damanov, Gennady Panteleimonovich
Moscow, 125195 (RU)
• Kukushkin, Vadim Henrikovich
Moscow 110113 (RU)
• Movshovich, Eduard Borisovich
Moscow 117571 (RU)

• Aslanova, Ljudmila Grigorievna
Moscow 109444 (RU)

(72) Inventor:
ASLANOVA, Ljudmila Grigorievna
Moscow, 109444 (RU)

(74) Representative:
Einsel, Martin, Dipl.-Phys. et al
Patentanwalt,
Jasperallee 1A
38102 Braunschweig (DE)

(54) **METHOD FOR PRODUCING BASALTIC FIBRES AND DEVICE FOR REALISING THE SAME**

(57) The present invention relates to the production of mineral fibres made of natural materials from the group of basalt. The method of the present invention comprises loading the basalt into a melting furnace, melting down said basalt, stabilizing the glass mass in a feeder at a temperature of between 1250 and 1450 °C, producing the fibres through a feeding unit, drawing the fibres through dies, greasing said fibres and finally winding them onto reels. Before loading into the furnace, the basalt is pre-heated at a temperature of between 150 and 900°C, while the melted glass mass is maintained in the stabilization zone of the melting furnace until a fibre production temperature of $t^{melt} + (50 \div 250 °C)$ is reached. The device for realizing this method comprises the following elements: a basalt dosing unit; a melting furnace; a feeder; a plurality of dies; and mechanisms for lubricating and for winding the fibres onto reels. The dosing unit comprises a heat exchanger which is connected to the firebox of the furnace, while the furnace comprises a stabilization zone for the melted glass mass which is connected to the feeder. This method may be used to shorten the industrial cycle and to increase the fibre resistance and thermal endurance.

## Description

### Field of the invention

The group of inventions relates to manufacture of mineral fibres out of natural materials of the basalt group (basalts, andesitobasalts, andesites, gabbro etc.) which can be used in building, textile and chemical industries.

### Background of the Invention

There are three main types of rock composition of the basalt group. The first type: rock composition enriched with oxides of Fe and Ti (~70% of $Fe_2O_3$ and 20% of $TiO_2$). The second type: basalt rocks enriched with oxides of Al and Si (~ ± 25% of $Al_2O_3$ and 55% of $SiO_2$). The third type: basalt rocks enriched with oxides of Mg and Ca, Fe (~ 12% of MgO and 20% of CaO, 10% of $Fe_2O_3$).

All these compositions are intended for basaltic fibres manufacture. However, to obtain temperature-, and chemical-resistant fibre of high quality, the basalt rock compositions is limited by the content of oxides. For example, in order to produce basaltic fibres, the glass is known containing the oxides $SiO_2$, $Al_2O_3$, $TiO_2$ $Fe_2O_3$ ,FeO, MnO, CaO, MgO, $K_2O$, $Na_2O$, $SO_3$, $P_2O_5$, $Se_2O_3$, ZnO with the relation of constituents $Al_2O_3$ / CaO+MgO < 2.0, ensuring increased acid resistance and temperature range of manufacture (RU, patent 2039019, cl. CO3C13/02, 1995)/

However the known composition of glass makes it possible to obtain high content of the oxides $Al_2O_3$ only in the specified range. This limits the use of basalts of other types and with other relations of oxides and eliminates the possibility of manufacture from them a good acid - and alkali-resistant fibre of high heat stability.

The fibre manufacture from glass mass of each individual composition requires certain know-how of its production.

The closest method to the proposed one in its technical essence and the obtained result is the method for producing basaltic fibres which includes charging, melting of basalt in the interior of the furnace, feeding the melt into the feeder and stabilizing the glass mass, manufacture of fibre through a feeding unit, pulling the fibre through spinnerets, oiling and reeling it up onto bobbins (RU, patent 2039715, cl. CO3B37/02, 1995).

The closest device to the proposed one is the device for producing basaltic fibres which includes a basalt weigher, a melting furnace, a feeder with discharging devices, feeding units, spinnerets, mechanisms for applying oil and reeling the fibre up onto bobbins (RU, patent 2039715, cl. C03B37/02, 1995).

Disadvantages of the known method and device are: not very high quality of the fibre at a low per cent of manufacture and the complexity of production process because of the mecesity of the preparation of basalt rock, the necessity of great temperature range in the melting furnace, a long cycle of glass mass stabilization that involves the possibility of its cristallization and hence vitrification on the surface of spinnerets.

### Disclosure of the Invention

The aim of the invention is to work out a method and a device for obtaining corrosion resistant, heat stable continuous fibres out of basalt rocks of numerous compositions and to simplify the technology and the apparatus of its manufacure.

The technical result of the realization of the proposed method and device is to widen technical possibilities of using basalt rocks of a wide range with a reduced process cycle, to increase the stability of the process, to improve strength, corrosion resistance and heat stability of the fibre.

The technical result is obtained in such a way that in the method for producing basaltic fibres including basalt charging into a melting furnace, its melting, stabilizing glass mass in the feeder, manufacture of fibre through feeding units, its pulling through spinnerets, oiling and reeling it up onto bobbins, according to the invention the basalt is heated before charging it into the furnace, and the melted glass mass is kept in the stabilizing section of a melting furnace until it reaches the fibre manufacture temperature, and stabilizing in the feeder is carried out to obtain glass mass composition with the relation of basic constituents

$$\frac{Al_2O_3 + TALIC > SiO_2}{CaO + MgO} \geq 3 \qquad \frac{FeO}{Fe_2O_3} \geq 0,5$$

$$\frac{2Al_2O_3 + SiO_3}{2Fe_2O_3 + Feo + CaO + MgO + K_2O + Na_2O} \geq 1,5.$$

The technical result is attained in the best degree provided that:

- before charging into the furnace basalt is heated to $150 \div 900°C$;
- the fibre manufacture temperature is maintained equal to $t^{melt} + (50 \div 250°C)$, where $t^{melt}$-is a temperature range of basalt melting;
- stabilizing of the glass mass in the feeder is carried out at the temperature equal to $1250 \div 1450 °C$.

The technical result is obtained in such a way that in the device for producing basaltic fibres, including a basalt weigher, a melting furnace, a feeder with discharging devices, feeding units, spinnerets, mechanisms for applying oil and reeling the fibre up onto bobbins, according to the invention, has a heat exchanger which connects the basalt weigher with a firing space of the melting furnace, and the melting furnace has a stabilizing section for keeping melted glass mass, which is connected with the feeder. The technical result is attained in the best degree provided that the height of the stabilizing section is equal to $0,4 \div 0,6$ of inner space height of the furnace.

Using of preliminary heating of basalt before charging into the furnace and stabilizing to obtain glass mass composition with the relation of basic constituents

$$\frac{Al_2O_3 + SiO_2}{CaO + MgO} \geq 3 \qquad \frac{FeO}{Fe_2O_3} \geq 0,5$$

$$\frac{2Al_2O_3 + SiO_2}{2Fe_2O_3 + Feo + CaO + MgO + K_2O + Na_2O} \geq 1,5$$

makes possible to remove crystal water, gas bubbles and foam, to sabilize the volume of glass mass, obtain even and smooth surface and ensure the stability of the temperature range and viscosity which is essential for fibre manufacture. The presence of a heat exchanger in the weigher on simultaneous charging ensures uniform heating throughout the volume of basalt by the flow of hot air from the firing space of the melting furnace that enables to utilize waste gases and to reduce fuel consumption. The presence of the stabilizing section of melted glass mass in the furnace, the height of which is $0,4 \div 0,6$ of the height of the furnace interior space, contributes to stabilizing the melt in volume at exit out of the furnace with a specified temperature. The stabilizing section height is determined by the melt height as the temperature decreases, and the possible exit of gases and foam.

All the above said, in applicant's opinion, allows to speak of the new combinations of technical features, which satisfy the criteria "novelty" and "inventive step".

The realization of the group of inventions allows to increase the productivity of the melting furnace and simultaneously to decrease fuel arid power consumption.

This fact proves hat the proposed method and device satisfy the criterion "industrial applicability".

**Brief description of the figures.**

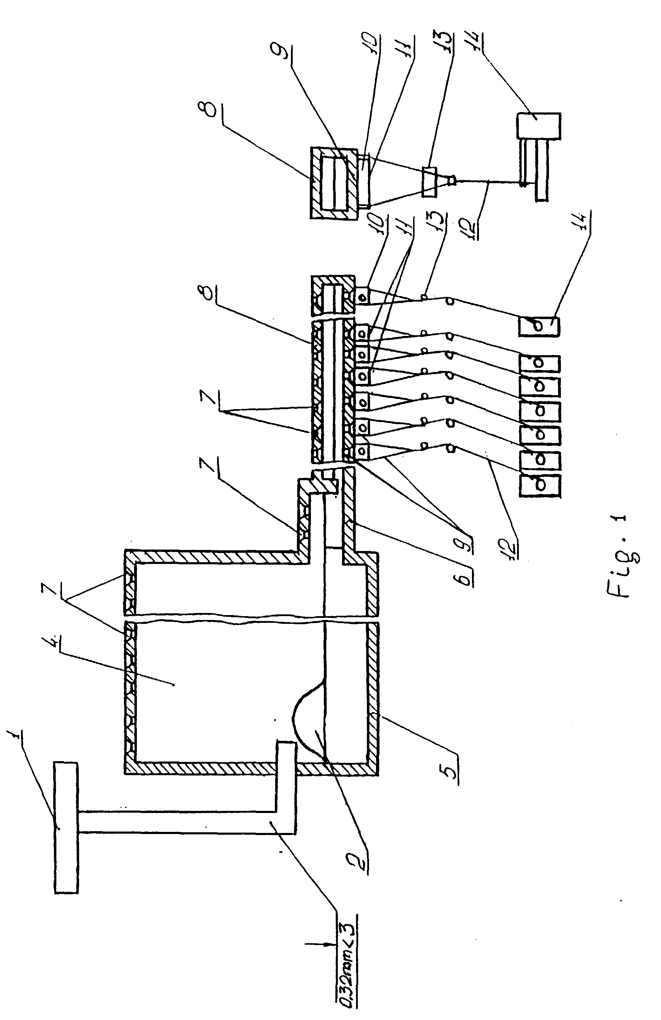

Fig. 1 shows a device producing basaltic fibres.

The device is a plant, which has a weigher (1) for basalt (2) charging, a heat exchanger (3), connected with a firing space (4) of the melting furnace (5). The melting furnace (5) has a stabilizing section (6) in which melted glass mass becomes stable in volume when reaching the temperature of fibre manufacture. The melting furnace (5) and stabilizing section (6) have heating systems (7). The stabilizing section (6) of the melting furnace (5) is connected to a feeder (8) where the melt becomes stable till averaging the mass and ensuring the relation of constituents in the composition. The feeder (8) has discharging devices (9) and feeding units (10) delivering the melt into spinnerets (11) through which pulling the basaltic fibres (12) occurs, then the fibres (12) are supplied to a mechanism (13) for oiling and reeling it up onto bobbins (14).

**The best mode for carrying out the invention**

The method for producing basaltic fibres is as follows. The used basalt compositions are given in Tables 1-4.

Basalt rocks are first cleared from impurities and powdered and through the weigher (1) are delivered into the melting furnace (5). In so doing, the weigher (1) is connected with a heat exchanger (3) where basalts (2) are heated to a temperature of 150 + 900 °C by hot air coming from the firing space (4) of the furnace (5). The basalts (2) heated enter the melting furnace (5) where they melt at a temperature of 1450 °C ± 50 °C until glass mass melt is formed. Then the glass mass melt enters the stabilizing section (6) of the melting furnace (5), which limited height ensures the stabilization and temperature reduction to a temperature of fibre manufacture: $t^{melt}$ + (50 ÷ 250 °C). In the section (6) gas babbles and foam are expelled and the surface becomes smooth and even. The melting furnace (5) and its stabilizing section (6) have heating systems (7). Out of the stabilizing section (6) a partially stabilized melt of glass mass enters the feeder (8) for averaging and obtaining the composition necessary for fibre manufacture. The feeder (8) also has heating systems (7) to maintain a temperature range of fibre manufacture 1350 ÷ 1450 °C and a viscosity of 60 - 240 Pa/s.

Examples of glass mass compositions and production process conditions of fibre manufacture are presented in Tables 5, 6.

Out of the feeder (8) by means of a stream feeding unit (9) the melt of glass mass is delivered through feeding units (10) to spinnerets (11) and elementary threads of the fibre (12) are pulled which are oiled by a mechanism (13) and reeled up onto bobbins (14).

Physico-mechanical properties of basalt fibres are shown in Table 7.

**Industrial applicability**

As will be seen from the Table 7 the method proposed and the device to realize it make it possible to obtain high-strength, corrosion resistant, heat stable continuous fibre out of basalt rocks of numerous compositions and to simplify the technology of its manufacture.

Table 1

| Composition number | Composition of rock base | | | | | | | | | |
|---|---|---|---|---|---|---|---|---|---|---|
| | Na | Mg | Al | Si | K | Ca | Ti | Mn | Fe | P |
| 1. | 4,567 | 0,232 | 11,537 | 32,932 | 2,426 | 1,428 | 12,771 | 0,240 | 33,968 | - |
| 2. | 0,415 | 13,552 | 1,153 | 51,318 | 0,184 | 21,752 | 1,320 | 0,309 | 9,999 | - |
| 3. | 6,573 | 0,358 | 20,340 | 60,648 | 4,873 | 2,088 | 1,506 | 0,001 | 2,689 | 0,326 |
| 4. | 3,513 | 4,067 | 11,235 | 44,778 | 2,670 | 7,883 | 5,325 | 0,474 | 19,651 | 0,454 |
| 5. | 5,744 | 0,465 | 19,541 | 56,221 | 4,503 | 3,924 | 2,889 | 0,180 | 5,642 | 0,890 |

Table 2

| Composition number | Composition of large inclusions | | | | | | | | | |
|---|---|---|---|---|---|---|---|---|---|---|
| | Na | Mg | Al | Si | K | Ca | Ti | Mn | Fe | P |
| 1. | 5,420 | 0,352 | 26,824 | 54,104 | 0,461 | 10,875 | 0,330 | 0,061 | 1,552 | 0,00 |
| 2. | 6,672 | 0,000 | 20,207 | 64,108 | 6,410 | 1,540 | 0,300 | 0,024 | 0,489 | 0,248 |
| 3. | 1,425 | 13,499 | 2,304 | 50,003 | 0,166 | 19,882 | 1,917 | 0,216 | 10,279 | 0,871 |
| 4. | 0,984 | 0,685 | 24,053 | 56,550 | 4,568 | 8,310 | 2,847 | 0,031 | 1,992 | 0,00 |
| 5. | 4,160 | 1,859 | 17,890 | 58,470 | 4,688 | 5,817 | 0,497 | 0,245 | 6,378 | 0,00 |

Table 3

| Composition number | Composition of small inclusions | | | | | | | | | |
|---|---|---|---|---|---|---|---|---|---|---|
| | Na | Mg | Al | Si | K | Ca | Ti | Mn | Fe | P |
| 1. | 5,775 | 0,413 | 18,112 | 63,813 | 8,139 | 1,459 | 0,132 | 0,000 | 2,156 | 0,000 |
| 2. | 11,614 | 2,263 | 22,164 | 55,601 | 0,260 | 2,243 | 0,159 | 0,098 | 3,819 | 1,776 |
| 3. | 0,422 | 1,364 | 0,817 | 0,830 | 0,086 | 0,214 | 23,541 | 1,226 | 71,502 | 0,000 |
| 4. | 0,371 | 2,138 | 1,035 | 0,627 | 0,095 | 0,060 | 20,530 | 0,796 | 72,217 | 0,134 |
| 5. | 0,727 | 12,683 | 1,364 | 49,475 | 0,187 | 20,085 | 2,023 | 0,250 | 13,121 | 0,087 |

Table 4

| Composition number | Average composition of starting basalt | | | | | | | | | |
|---|---|---|---|---|---|---|---|---|---|---|
| | Na | Mg | Al | Si | K | Ca | Ti | Mn | Fe | P |
| 1. | 6,325 | 1,970 | 17,833 | 55,903 | 4,553 | 4,672 | 1,532 | 0,160 | 6,977 | 0,000 |
| 2. | 5,058 | 7,932 | 14,127 | 46,164 | 2,320 | 4,697 | 1,343 | 0,396 | 16,461 | 1,512 |
| 3. | 5,877 | 2,773 | 17,493 | 53,716 | 8,923 | 4,867 | 1,299 | 0,098 | 8,276 | 1,680 |
| 4. | 4,587 | 3,187 | 17,660 | 52,501 | 3,927 | 5,515 | 1,701 | 0,155 | 8,541 | 1,953 |
| 5. | 4,404 | 3,470 | 16,824 | 51,606 | 2,810 | 7,681 | 1,852 | 0,185 | 9,223 | 2,944 |

Table 5

| Composition number | Glass mass composition for fibre pulling | | | | | | | | | | | | |
|---|---|---|---|---|---|---|---|---|---|---|---|---|---|
| | Na | Mg | Al | Si | K | Ca | Ti | Mn | Fe | P | $Al_2O_3 + SiO_2$ | FeO | $2Al_2O_3 + SiO_2$ |
| | | | | | | | | | | | $CaO + MgO$ | $Fe_2O_3$ | $2Fe_2O_3 + FeO + CaO + MgO + K_2O + Na_2O$ |
| 1. | 2,00 | 10,58 | 11,82 | 50,42 | 0,52 | 8,84 | 1,04 | 8,18 | 12,25 | 0,21 | 3,2 | 3,34 | 2,0 |
| 2. | 2,34 | 5,47 | 12,58 | 49,03 | 0,66 | 9,53 | 2,85 | 0,32 | 14,03 | 0,30 | 4,11 | 2,62 | 2,06 |
| 3. | 3,88 | 4,65 | 16,75 | 50,61 | 1,0 | 9,07 | 1,81 | 0,18 | 10,26 | 0,40 | 4,9 | 0,54 | 2,37 |
| 4. | 2,93 | 5,99 | 14,89 | 50,15 | 0,34 | 3,82 | 2,04 | 0,22 | 12,05 | 1,98 | 4,38 | 1,52 | 2,37 |

Table 5 (continued)

| Com-position number | Glass mass composition for fibre pulling | | | | | | | | | | | | |
|---|---|---|---|---|---|---|---|---|---|---|---|---|---|
| | Na | Mg | Al | Si | K | Ca | Ti | Mn | Fe | P | $Al_2O_3$ $+ SiO_2$ | FeO | $2Al_2O_3 +$ $SiO_2$ |
| | | | | | | | | | | | CaO+ MgO | $Fe_2O_3$ | $2Fe_2O_3+$ $+ FeO +$ $+ CaO +$ $+ MgO +$ $+ K_2O +$ $+ Na_2O$ |
| 5. | 4,75 | 3,54 | 15,33 | 49,66 | 3,10 | 6,56 | 2,84 | 0,21 | 12,05 | 1,98 | 6,44 | 1,62 | 2,39 |

Table 6

| Composition number | Point of crystalization upon limit | Fibre diametre | Heat range of fibre manufacture | Viscosity range at T $_{fmhr}$ |
|---|---|---|---|---|
| | $T_{culp}$ °C | mcm | T fmhr °C | Pa C |
| 1. | 1290 | 8,4 - 12 | 1360 - 1400 | 104 - 62 |
| 2. | 1275 | 7,0 - 13 | 1380 - 1440 | 112 - 64 |
| 3. | 1240 | 7,0 - 11 | 1370 - 1450 | 188 - 64 |
| 4. | 1250 | 7,0 - 12 | 1350 - 1440 | 235 - 96 |
| 5. | 1245 | 7,0 - 12 | 1350 - 1430 | 235 - 104 |

Table 7

| Composition number | Strength and chemical resistance of fibre | | | | |
|---|---|---|---|---|---|
| | Fibre diametre | Tensile strength | Chemical resistance in % after three-hour boiling | | |
| | mcm | MPa | $H_2O$ | NaOH | HCl |
| | | | | 0,5H | 2H | 2H |
| 1. | 10,2 | 2400 | 99,3 | 92,6 | 85,3 | 75,9 |
| 2. | 10,0 | 3110 | 99,4 | 97,5 | 94,0 | 80,6 |
| 3. | 9,0 | 2240 | 99,5 | 98,2 | 95,2 | 91,0 |
| 4. | 9,5 | 3050 | 99,4 | 97,6 | 96,8 | 90,1 |
| 5. | 9,5 | 3100 | 99,4 | 94,1 | 92,5 | 83,5 |

## Claims

1. Method for producing basaltic fibres,which includes basalt charging into a melting furnace, its melting, stabilizing the glass mass in the feeder and manufacture of fibre through feeding units, its pulling through spinnerets, oiling and reeling it up onto bobbins, characterized in that basalt is heated before charging it into the furnace, melting glass mass is kept in the stabilizing section of a melting furnace until it reaches the fibre manufacture temperature, stabilizing in the feeder is carried out to obtain glass mass composition with the relation of basic constituents

$$\frac{Al_2O_3 + SiO_2}{CaO + MgO} \geq 3 \qquad \frac{FeO}{Fe_2O_3} \geq 0,5$$

$$\frac{2Al_2O_3 + SiO_2}{2Fe_2O_3 + Feo + CaO + MgO + K_2O + Na_2O} \geq 1,5$$

2. A method according to claim 1, characterized in that before charging into furnace basalt is heated up to 150 ÷ 900°C.

3. A method according to any of claims 1, 2, characterized in that the fibre manufacture temperature is maintained equal to $t^{melt} + (50 \div 250 °C)$, where $t^{melt}$ - is a temperature range of basalt melting.

4. A method according to any of claims 1 -3, characterized in that stabilizing of the glass mass in the feeder is carried out at the temperature equal to 1250 ÷ 1450 °C.

5. A device for producing basaltic fibres which includes a basalt weigher; a melting furnace, a feeder with discharging devices, feeding units, spinnerets, mechanisms for applying oil and reeling the fibre up onto bobbins, characterized in that it has a heat exchanger which is connects the basalt weigher with a firing space of the melting furnace, and the melting furnace has a stabilizing section for keeping melted glass mass which is connected with the feeder.

6. A plant according to claim 5, characterized in that the height of the stabilizing section is equal to 0,4 = 0,6 of inner space height of the furnace.

Fig. 1

## INTERNATIONAL SEARCH REPORT

| International application No. |
|---|
| PCT/RU 97/00355 |

**A. CLASSIFICATION OF SUBJECT MATTER**

IPC6 : C03B 37/02

According to International Patent Classification (IPC) or to both national classification and IPC

**B. FIELDS SEARCHED**

Minimum documentation searched (classification system followed by classification symbols)

IPC6 : C03B 37/00-37/065

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | SU 299472 A (V.A. DARENSKY et al) 25 May 1971 (25.05.71) | 1-4 |
| A | US 4199336 A (CORNING GLASS WORKS) 22 April 1980 (22.04.80) | 1-6 |
| A | EP 0289240 A1 (GLASSFLAKE LTD) 2 November 1988 (02.11.88) | 1-6 |
| A | RU 2018491 C1 (KIBOL V.F.) 30 August 1994 (30.08.94) | 1-4 |

☐ Further documents are listed in the continuation of Box C.     ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | |
| "O" document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" document published prior to the international filing date but later than the priority date claimed | "&" document member of the same patent family |

| Date of the actual completion of the international search | Date of mailing of the international search report |
|---|---|
| 18 February 1998 (18.02.98) | 25 March 1998 (25.03.98) |

| Name and mailing address of the ISA/ RU | Authorized officer |
|---|---|
| | |
| Facsimile No. | Telephone No. |

Form PCT/ISA/210 (second sheet) (July 1992)